# EUROPÄISCHE PATENTANMELDUNG

(11) **EP 0 919 782 A2**
(43) Veröffentlichungstag der Anmeldung: **02.06.1999**
(21) Anmeldenummer: 98120816.8
(22) Anmeldetag: 03.11.1998
(51) Int. Cl.: F42B 33/06

(54) **Entsorgungsgerät und Verfahren zur Entsorgung für Insassenschutzeinrichtungen mit pyrotechnischen Zündern**

(30) Priorität: 29.11.1997 DE 19753058
(71) Anmelder: DaimlerChrysler AG, 70567 Stuttgart (DE)
(72) Erfinder: Fendt, Günter, 86529 Schrobenhausen (DE); Hussmann, Robert, 86399 Bobingen (DE); Ebert, Friedrich, 71116 Gärtrigen (DE)
(74) Vertreter: Maute, Hans-Jürgen, Dipl.-Ing.

(57) **Zusammenfassung**

Entsorgungsgerät und Verfahren zur Entsorgung für Insassenschutzeinrichtigungen mit pyrotechnischen Zündern, bei dem eine Vorrichtung zur Bereitstellung eines Zündbefehles vorgesehen ist und diese durch Schließen eines Zündauslösemittels den Zündbefehl an ein Steuergerät oder direkt an den Zünder geleitet. Vorzugsweise ist eine Vorrichtung zur Erfassung der im Fahrzeug befindlichen Insassenschutzeinrichtigungen mit einem pyrotechnischen Zünder vorgesehen, so daß diese zunächst erfaßt, dann einzeln gezündet und dieses nachgeprüft und protokolliert wird.

## Beschreibung

Die Erfindung betrifft ein Entsorgungsgerät sowie ein Verfahren zur Entsorgung für Insassenschutzeinrichtigungen mit einem pyrotechnischen Zünder gemäß dem Oberbegriff des Patentanspruchs 1 sowie Anspruch 7.

Insbesondere in Kraftfahrzeugen haben sich heute Insassenschutzeinrichtungen mit pyrotechnischen Zündern, bspw. Airbags, Gurtstraffer u.s.w. aufgrund ihrer schnellen Reaktionszeit und ihrer nachweisbaren Insassenschutzwirkung durchgesetzt. Nachteil ist jedoch die bisher weitgehend offene Frage der Entsorgung von Kraftfahrzeugen mit derartigen Insassenschutzeinrichtungen. So ist es aus Arbeits- und Brandschutzgründen nicht vertretbar, Kraftfahrzeuge mit intakten pyrotechnischen Zündern und somit pyrotechnischem Wirkmaterial in den Kreislauf der Verschrottung und Schrottwiederverwertung zu geben.

Außerdem wird die Anzahl der in einem Fahrzeug eingebauten Insassenschutzeinrichtungen weiter steigen und fahrzeugindividuell entsprechend des Kundenausstattungswunsches varieren, so daß auch die Übersichtlichkeit über die Anzahl und Lage der pyrotechnischen Zünder verloren gehen kann und ein Ausbau derer zu teuer und unsicher ist.

Aufgabe der Erfindung ist es somit, ein Entsorgungsgerät sowie ein verfahren zur Entsorgung anzugeben, welches eine sichere Entsorgung gewährleistet.

Diese Aufgabe Wird durch die kennzeichenden Merkmale des Anspruches 1 in Verbindung mit dem Anspruch 7 für das Verfahren gelöst. Vorteilhafte Weiterbildungen sind den untergeordneten Ansprüchen zu entnehmen, wobei auch Kombinationen und Weiterbildungen einzelner Merkmale miteinander denkbar sind.

Vorteil des Entsorgungsgeräts und des Verfahrens zur Entsorgung ist die sichere, protokollierbare und an die unterschiedlichen Ausstattungen von Kraftfahrzeugen sich anpassende Entsorgung.

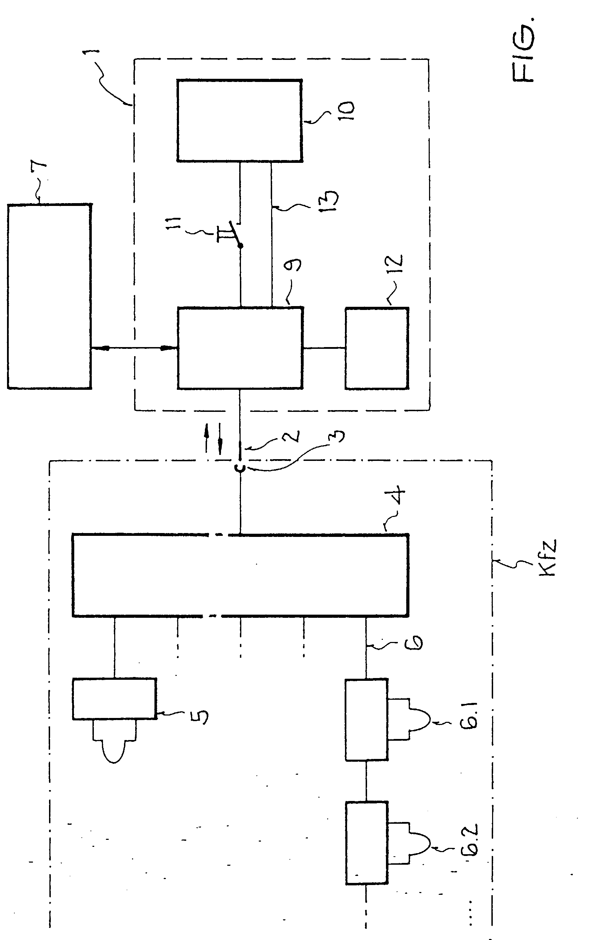

Die Erfindung wird nachfolgend anhand eines Ausführungsbeispiels und der Figur näher erläutert.

Kurze Beschreibung der Figur:
- Blockschaltbild des Insassenschutzsystems sowie des Entsorgungsgeräts

Die Figur zeigt ein Blockschaltbild eines zu entsorgenden Insassenschutzsystems innerhalb des Kraftfahrzeuges (Kfz) sowie das Entsorgungsgerät 1. Dieses ist über einen Stecker 2, und einen Steckeranschluß 3 im Fahrzeug mit dem Steuergerät 4 verbunden. Stecker 2 und Steckerbuchse 3 können selbstverständlich auch als Buchse mit zugehörigem Buchsenanschluß ausgeführt sein. Da alle Baugruppen des Insassenschutzsystems im Kfz an unterschiedlichen Stellen montiert sind, ist das Kfz quasi als Black-Box zu verstehen, deren Aufbau von außen nicht einsichtig ist und folglich analysiert werden muß. An dem Steuergerät befinden sich je nach Art des Insassenschutzsystems einzelne Zünder 5 und/oder in einem oder mehreren Zündersträngen 6 angeordnet mehrere Zünder 6.1, 6.2 ... Das Entsorgungsgerät 1 besteht aus einer Vorrichtung zur Bereitstellung der Zündenergie 10 mit einem Zündauslösemittel 11, hier dargestellt als Schalter und einer Vorrichtung 9 zur Erfassung der im Fahrzeug befindlichen Insassenschutzeinrichtungen bzw. deren Zünder. Falls im Kfz ein Insassenschutzsystem verwendet wird, bei dem bspw. vor dem Zünden bereits den Zündern (5, 6.1, 6.2,...) oder dem Steuergerät 4 die Zündenergie bereitsgestellt wird und dort vor Ort im Kfz in einem Zwischenspeicher auf Abruf bereitgehalten wird, kann die Übertragung der Zündenergie aus der Vorrichtung zur Bereitstellung der Zündenergie 10 auch schon vor der Übertragung des Zündbefehls bspw. über die gezeigte Versorgungsleitung 13 bspw. im Rahmen einer Betriebsaktivierung des Entsorgungsgerätes 1 und des Steuergerätes 4 im Kfz erfolgen. Der Zündbefehl durch Betätigen des Zündauslösemittels 11 führt dann zur Freigabe der bereits in den Zwischenspeichern gespeicherten Zündenergie an die Zünder (5, 6.1, 6.2, ...).

Das Entsorgungsgerät 1 kann auch mit einer externen Datenquelle 7 verbunden sein. Ergänzend ist außerdem eine Überwachungsanzeige 12 dargestellt, anstelle derer aber auch ein Drucker o.ä. zum nachweisbaren Überwachen des Entsorgungsvorgangs anschließbar ist.

Für die Erfassung der im Fahrzeug befindlichen Insassenschutzeinrichtungen bzw. ihrer Zünder kommen mehrere Lösungen in Frage, die alternativ durch eines oder mehrere verschiedene Entsorgungsgeräte realisiert werden.

Zunächst soll der Fall der Abfrage über eine Fahrzeugkennziffer beschrieben werden. Diese Fahrzeugkennziffer wird entweder aus dem Steuergerät 4 ausgelesen oder extern eingegeben. Danach wird von der Vorrichtung 9 die Anzahl und/oder Adresse der im Fahrzeug befindlichen Insassenschutzeinrichtungen nebst Zünder aus der externen Datenquelle 7, bspw. einer PC-Hersteller-Datenbank ermittelt. Daneben ist auch die Abfrage aus dem Steuergerät 4 denkbar, welches die Adressen für eigene Adressierungsfunktionen bereits abgelegt hat.

Die Erfassung der im Fahrzeug befindlichen Insassenschutzeinrichtungen kann aber auch durch einen Prüfzyklus ermittelt werden, indem jeweils die maximal mögliche Anzahl bzw. die Adressen durchgeprüft werden. Sie kann in Form einer Adressierung oder Leitfähigkeitsprüfung erfolgen. Hervorzuheben ist hierbei, daß dies auch bei einem Insassenschutzsystem ohne zentrales Steuergerät denkabr ist, indem die Abfrage und nachfolgende Zündung direkt über den Zünderstrang 6 erfolgt, der dazu direkt mit dem Steckeranschluß 3 verbunden realisiert werden muß.

Der Anschluß 2 ist als multifunktionale Schnittstelle für die verschiedenen Steuergerätesysteme oder Zündertypen ausgeführt. So können bspw. mehrere Steckertypen parallel anschließbar sein.

Wurden die im Fahrzeug befindlichen Insassenschutzeinrichtungen ermittelt, werden diese über die Vorrichtung 9 angewählt und mittels der Vorrichtung zur Bereitstellung des Zündbefehles sowie dem Zündauslösemittel gezündet. Die Vorrichtung 9 kann dabei durch den Versuch der Adressierung und/oder Leitfähigkeitsprüfung den Zustand vor sowie auch nach der Zündung einzeln prüfen und feststellen, ob alle Zünder gezündet wurden und ggfs. welche bspw. aufgrund eines Defekts nicht auslösten.

Der Vergleich von vorab ermittelten und nachher geprüften Zündern erlaubt eine sichere Protokollierung der Entsorgung, wie sie aus Gründen der Sicherheit zukünftig evt. Standard wird. Ergänzt wird das Enbtsorgungsgerät durch eine Variante zum direkten Auslösen einzelner Zünder, falls bspw. das Steuergerät 4 defekt ist. Dann wird die Vorrichtung 9 quasi überbrückt und direkt durch das Schließen des Zündauslösemittel 11 die Vorrichtung zur Bereitstellung der Zündenergie 10 mit dem Zünder verbunden. Die Versorgungsspannung für das Entsorgungsgerät 1 kann aus einem externen Netzanschluß, bspw. 220 Volt-Netz, oder aus der Kfz-Bordspannung, bspw. einer Batterie, oder eines im Entsorgungsgerät befindlichen Akkus bezogen werden.

Das Steuergerät 4 sowie die Vorrichtung 9 sind somit für die Übertragung und Verarbeitung von Daten, insbesondere der Daten der einzelnen Zünder und des Zündbefehls, aber auch zur Bereitstellung der Versorgungsspannung für sich selbst, für die für eventuelle Zündenergie - Zwischenspeicher in den Zündern und deren Elektronik ausgelegt. Auf eine umfassende Darstellung des Versorungsspannungssystems wurde verzichtet, kann jedoch naheliegend ergänzt werden.

## Patentansprüche

1. Entsorgungsgerät für Insassenschutzeinrichtigungen mit einem pyrotechnischen Zünder, welches eine Vorrichtung zur Bereitstellung eines Zündbefehles verbunden über ein Zündauslösemittel hin zu dem Zünder oder einem vorgeschalteten Steuergerät aufweist und durch schließen des Zündauslösemittels der Zündbefehl an das Steuergerät oder an den Zünder geleitet und dieser gezündet wird.

2. Entsorgungsgerät nach Anspruch 1, **dadurch gekennzeichnet, daß** eine Vorrichtung zur Erfassung der im Fahrzeug befindlichen Insassenschutzeinrichtigungen mit einem pyrotechnischen Zünder vorgesehen ist.

3. Entsorgungsgerät nach Anspruch 2, **dadurch gekennzeichnet, daß** die Vorrichtung zur Erfassung der im Fahrzeug befindlichen pyrotechnisch betriebenen Insassenschutzeinrichtigungen zunächst einen Prüfzyklus durchführt, indem die mögliche Anzahl und/oder Adressen der Insassenschutzeinrichtungen durchgeprüft und festgestellt wird, welche angeschlossen sind.

4. Entsorgungsgerät nach Anspruch 2, **dadurch gekennzeichnet, daß** die Vorrichtung zur Erfassung der im Fahrzeug befindlichen pyrotechnisch betriebenen Insassenschutzeinrichtigungen aus einem Steuergerät die Adresscodes der angeschlossenen Insassenschutzeinrichtungen abfragt.

5. Entsorgungsgerät nach einem der vorangehenden Ansprüche, **dadurch gekennzeichnet, daß** die Vorrichtung zur Erfassung der im Fahrzeug befindlichen pyrotechnisch betriebenen Insassenschutzeinrichtigungen mittels einer Kennziffer des Fahrzeuges, insbesondere der Fahrzeugidentifikationsnummer, einen Vergleich mit einer Fahrzeugherstellerdatenbank durchführt.

6. Entsorgungsgerät nach einem der vorangehenden Ansprüche, **dadurch gekennzeichnet, daß** mehrere Anschlüsse für die unterschiedlichen Stecker und Systeme von pyrotechnischen Insassenschutzeinrichtigungen vorgesehen sind und diese entsprechend ausgewählt werden können.

7. Verfahren zum Entsorgen von Insassenschutzeinrichtigungen mit einem pyrotechnischen Zünder, indem mittels einer Vorrichtung zur Bereitstellung eines Zündbefehles eine kontrollierte Zündung dieser erfolgt.

8. Verfahren nach Anspruch 7, **dadurch gekennzeichnet, daß** zunächst die im Fahrzeug befindlichen Insassenschutzeinrichtigungen mit einem pyrotechnischen Zünder erfaßt werden.

9. Verfahren nach Anspruch 8, **dadurch gekennzeichnet, daß** zunächst ein Prüfzyklus durchgeführt wird, indem die möglichen Adressen der Insassenschutzeinrichtungen angesprochen werden und festgestellt wird, welche antworten und somit angeschlossen sind.

10. Verfahren nach Anspruch 8, **dadurch gekennzeichnet, daß** aus einem Steuergerät die Adresscodes der angeschlossenen Insassenschutzeinrichtungen abfragt werden.

11. Verfahren nach Anspruch 8, **dadurch gekennzeichnet, daß** mittels einer Kennziffer des Fahrzeuges, insbesondere der Fahrzeugidentifikationsnummer, in einem Vergleich mit einer Fahrzeugherstellerdatenbank die dort hinterlegte Anzahl und/oder die Addressen ermittelt werden.

12. Verfahren nach Anspruch 8, **dadurch gekennzeichnet, daß** mittels einer Leitfähigkeitsuntersuchung festgestellt wird, ob ein in einem vorgegebenen Bereich liegender elektrischer Widerstand vorliegt, dies als intakter Zünder interpretiert wird und dieser somit ausgelöst wird.

13. Verfahren nach Anspruch 9, **dadurch gekennzeichnet, daß** Abweichungen zwischen der Anzahl der im Fahrzeug befindlichen Insassenschutzeinrichtigungen und der intakten Zünder die Anzahl und/oder die Adressen der nicht intakten Zünder an eine Auswerteeinheit gemeldet werden.

14. Verfahren nach Anspruch 9 oder 13, **dadurch gekennzeichnet, daß** mittels einer zweiten Leitfähigkeitsuntersuchung nach dem Auslösen festgestellt wird, ob der elektrische Widerstand nunmehr sehr groß ist und dies als erfolgreiche Zündung des Zünders interpretiert wird.

15. Verfahren nach Anspruch 14, **dadurch gekennzeichnet, daß** auch die Ergebnisse der zweiten Leitfähigkeitsprüfung an die Auswerteeinheit gemeldet werden und ein Auswerteprotokoll erstellt wird, welches aus der Anzahl und/oder den Adressen der im Fahrzeug befindlichen Zünder und der Anzahl und/oder den Adressen der erfolgreich gezündeten Zünder ermittelt, ob und/oder welche Zünder gezündet wurden sowie ob und/oder welche nicht.
